(19) Europäisches Patentamt
European Patent Office
Office européen des brevets

(11) EP 1 134 191 A1

(12) EUROPÄISCHE PATENTANMELDUNG

(43) Veröffentlichungstag:
**19.09.2001 Patentblatt 2001/38**

(51) Int Cl.[7]: **C02F 1/32**, C02F 1/72, C02F 1/28

(21) Anmeldenummer: **00105532.6**

(22) Anmeldetag: **15.03.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Degussa AG**
**40474 Düsseldorf (DE)**

(72) Erfinder:
- **Sextl, Elfriede, Dr.**
  **63826 Geiselbach (DE)**
- **Fischer, Yvonne**
  **63776 Mömbris (DE)**
- **Noll, Jochen,**
  **63860 Rothenbuch (DE)**
- **Full, Roland, Dr.**
  **63768 Hösbach (DE)**

# (54) Verfahren zur Entfernung von organischen Stoffen aus Wasser

(57) Organische Stoffe werden aus wässrigen Systemen, wie Trinkwasser entfernt, indem man das wässrige System über eine Kombination aus einem photoaktiven Katalysator und/oder einem auf Zeolithen basierten Adsorbens leitet, und dabei gleichzeitig mit UV-Licht bestrahlt.

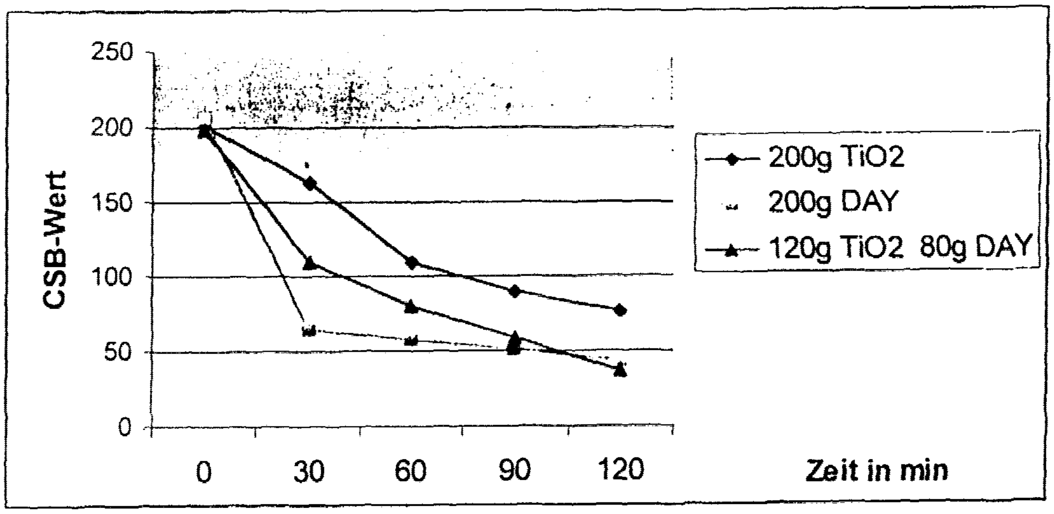


**Phenolabbau im LCK 614 Bereich (84mg Phenol/1000ml Wasser)**

Figur 6

EP 1 134 191 A1

## Beschreibung

Die Erfindung betrifft ein Verfahren zur Entfernung von organischen Stoffen aus Wasser und/oder wässrigen Systemen.

Es mag parodox klingen, wenn man feststellt, daß ausgerechnet die moderne Spurenanalytik, die den Nachweis von Schadstoffen im Wasser im Pikogramm-Bereich ($10^{-12}$ g/l) gestattet, zur Sensibilisierung vieler Bürger für Umweltbelastung beiträgt. Im Bereich der Grundwasserschäden sind neben den Mineralölen vor allem auch chlorierte Kohlenwasserstoffe, Chlorherbizide und in jüngster Zeit auch Arzneimittelrückstände von Bedeutung.

Die Trinkwasserverordnung verlangt, daß Leitungswasser für Privathaushalte frei von Schadstoffen ist. Wasser, Lebensmittel Nummer eins und Lebenselexier ist für viele Manschen gerade zu ein Symbol für Reinheit. Wir alle nutzen seine Reinigungskraft beim Waschen, Spülen, Putzen und Duschen, denn der Allzweckstoff $H_2O$ nimmt fast jeden Dreck auf, den Menschen von sich geben. Neueste Meldungen rauben nur die Illusion, daß das Grundwasser die letzte saubere Ressource sei. "Wasser - Schluck für Schluck ein Kunstprodukt", so titelt die Zeitschrift GEO im Februar 2000. Auch der Spiegel schockierte Anfang 1999 mit der Veröffentlichung einer breit angelegten Studie zur Trinkwasserreinheit. Nicht nur natürliche Abbauprodukte und Industriechemikalien bedrohen das Grundwasser. Wir alle tragen durch Ausscheidung von Humanpharmaka zur "Brunnenvergiftung" bei. Unter Fachleuten gilt die schleichende "Verweiblichung" der Welt mit erhöhter Unfruchtbarkeit bei Männern durch massiven Eintrag hormoneller Wirkstoffe der Antibabypille ins Wasser als gesicherte Tatsache. Für die Chemiker der Wasserwerke sind die Pharmaka "Worst-case-Substancen": Sie sind mit "herkömmlichen Methoden nicht messbar, kaum abbaubar, ohne sofort erkennbare Wirkung aber mit unbekanntem Langzeit-Potential".

Die Wirkstoffe im Wasser konfrontieren Analytiker und Sanierer mit einer Welle ungelöster Probleme. Klar ist, daß neue "Gifte" neue Strategien erfordern und so ist der Druck, neue Sanierungsverfahren zu entwickeln, immens.

"Selbst Regen ist inzwischen so mit Pestiziden belastet, daß er bei den Trinkwasserrecourcen durchfiele", schreibt GEO im jüngsten Heft vom Februar 2000, Torsten Engelhart, "Trinkwasser-Tropfen für Tropfen High Tech" in GEO 2.2000.

Für leichtflüchtige Chlorkohlenwasserstoffe gilt nach der Trinkwasserverordnung ein Grenzwert von 25 $\mu m \cdot l^{-1}$, bei Pflanzenschutzmitteln liegt er bei 0,1 $\mu g \cdot l^{-1}$ für den Einzelstoff, und bei 0,5 $\mu g \cdot l^{-1}$ in der Summe (TrinkwV vom 22.5.96, Bundesgesetzblatt Teil I, S. 760) (R. Weinland, H.V. Kiele, Sanierung von Gewässerschäden, Chemie in unserer Zeit, 4/1989, S. 130ff).

Für Arzneimittel im Trinkwasser sind offensichtlich noch keine Grenzwerte definiert Karl Höll, Wasser, de Gryter-Verlag, Berlin, 1979, Leonard Hütter, Wasser und Wasseruntersuchungen, Salle-Sauerland, Frankfurt am Main, 1992.

Nimmt man die Pestizidnorm zum Maßstab, dann wird ersichtlich, daß sie mit 0,38 $\mu g \cdot l^{-1}$ für Ibuprofen (Antirheumatike) (M. Brendel, "Großräumige Verteilung", in DER SPIEGEL Nr. 7 15.2.1999) im Grundwasserbrunnen deutlich überschritten sind. Diclofenac wurde in komunalen Abwässern aus Kläranlagen im Großraum Stuttgart immerhin mit 6,2 $\mu$g/l nachgewiesen (Möhle, Merz, Metzger, "Bestimmung von schwer abbaubaren organischen Verbindungen im Abwässer-Identifizierung von Arzneimittelrückständen", Vom Wasser 92 S.207-223, 1999). Noch kann eine akute Gefahr für den Verbraucher ausgeschlossen werden, denn die Dosierungen gelten als nicht therapeutisch wirksam. Es wird aber die Frage aufwerfen, wie Organismen auf lebenslange Einnahme kleinster Mengen von Medikamenten-Cocktails reagieren.

Aufgabe der Erfindung ist ein Verfahren zur Entfernung vom organischen Stoffen aus Wasser und/oder wässrigen Systemen zu entwickeln, das verhindert, daß Trinkwasserverbraucher medikamentös wirksame organische Stoffe aufnehmen.

Die vorliegende Erfindung zielt darauf ab, einen Reaktor für eine kontinuirliche Reinigungsstuffe zu entwikkeln, der den fotochemischen, titandioxidkatalysierten Abbau organischer Abwasserkontaminationen im Milligrammbereich verfolgt. Dabei sollten einerseits verschiedene organische Schadstoffparameter als Modellkomponenten aber auch Pestizide und Arzneimittel-Wirkstoffe zum Einsatz kommen. Andererseits war es von großem Interesse, die fotokatalytisch aktiven Komponenten durch Mischung mit metalldotierten Adsorbentien weiter zu optimieren. Die Ergebnisse im Bereich der fotoinduzierten Abwasserreinigung führen uns schließlich zu belichtungsfreien Reinigungsmethoden, die vor allem für die Trinkwasseraufbereitung relevant sein könnten. Dort hat die Aktivkohle bislang bestens funktioniert. Die Frage stellt sich, ob sie der neuen Herausforderung durch pharmazeutische Wirkstoffe gewachsen ist.

Gegenstand der Erfindung ist ein Verfahren zur Entferung von organischen Stoffen aus Wasser und/oder wässrigen Systemen, welches dadurch gekennzeichnet ist, daß man das Wasser oder das wässrige System über eine Kombination aus einem photoaktiven Katalysator und/oder einem Adsorbens leitet und gegebenenfalls dabei gleichzeitig mit US-Licht bestrahlt.

Als photoaktiven Katalysator kann man Titandioxod verwenden. Das Titandioxid kann Anatasstruktur aufweisen. Es kann ein pyrogenes Titandioxid sein.

Als Adsorbens kann man hydrophobe Zeolithe einsetzen. Die Zeolithe können einen Hydrophobie-Faktor von

größer 1 aufweisen.

Als Adsorbens können siliciumreiche Zeolithe wie zum Beispiel dealiminierte Y-Zeolithe und/oder ZSM-5-Zeolithe und/oder Mordenite eingesetzt werden. Das Adsorbens kann als Festbett eingesetzt werden.

Als Adsorbens können weiterhin metalldotierte Zeolithe eingesetzt werden.

Die Metalldotierung kann aus einem oder mehreren Edelmetallen bestehen. In einer besonderen Ausführungsform der Erfindung kann mann als Edelmetall ionisches oder elementares Palladium verwenden.

In einer Ausführungsform der Erfindung kann man die Bestrahlung mit einem UV-Licht der Wellenlänge kleiner/gleich 400 nm durchführen.

Das erfindungsgemäße Verfahren kann insbesondere dann durchgeführt werden, wenn die organischen Stoffe Pflanzenschutzmittel und/oder Arzneimittelwirkstoffe und/oder Stoffe mit östrogener Wirkung sind.

Mit dem erfindungsgemäßen Verfahren ist es möglich, Phenol-Kontaminationen im ppm-Bereich fotokatalytisch so weit abzubauen, daß Trinkwasserqualität erreicht wird. Unter UV-Belichtung lassen sich auch Herbizide und Arzneimittel-Wirksoffe, wie Diclofenac und Ibuprofen, zu 90 % mineralisieren. Die Dekontamination ist dann besonders effektiv, wenn das Katalysatorbett nicht nur den Fotohalbleiter Titandioxid, sondern auch eine hydrophoben Zeolithen enthält. Der Einsatz edelmetalldotierter Zeolithe ermöglicht die Reinigung ohne Bestrahlung. Durch Festphasenextraktion in zeolithgepackten Säulen werden im Eluat Reinigungsleistungen von 93 % bis 96 % erreicht. Eine Palladiumdotierung des Adsorbens führt zu einer weiteren Steigerung der Filtrationsleistung.

**Beispiele**

Erste Versuch in einem 250ml Standzylinder mit einem Quecksilber-Niederdruckstrahler (Strahlungsmaximum bei 254nm) bestätigten die Erkenntniss, daß signifikante Schadstoffentlastungen weder durch reine UV-Bestrahlung noch durch Schadstoff-Adsorption am unbestrahlen Titandioxid zu verzeichnen sind.

Die nächste Entwicklungsstufe der Versuchsapparatur führt zu einem Umlaufreaktor. Es handelt sich hierbei um ein doppelwandiges Reaktionsgefäß aus Edelstahl mit einem Fassungsvermögen von 500 ml und einem separaten Wassertank. Mit Hilfe einer Tauchpumpe, die sich im Wassertank befindet, wird ein Flüssigkeitsvolumen von 2,4 l kontinuierlich durch die Apparatur gespült. Die Förderung der Pumpe liegt bei 10-12 l/min. Im Inneren des Reaktionraums befindet sich ein Quecksilber-Hochdruckstrahler in einem Tauchrohr mit einer Leistung vom 150 W. Er ist vom Karalysatorbett umgeben.

Gute Reinigungsleistungen edelmetalldotierter Zeolith--Schüttungen führten zu belichtungsfreien Methoden der Schadstoffbeseitigung, bei denen - wie aus der Säulenchromatogragie bekannt - das belastete Wasser eine Glasröhre durchläuft, die mit verschiedenen Adsorbentien befüllt werden kann. Das Schüttungsvolument beträgt 120 ml. (Skizzen der Apparaturen siehe Figuren 1,2 und 3).

Es wird gemäß Literatur Dr. M.A. Malati, Entfernung von Wasserverschmutzungen durch Photokatalyse, CLB Chemie im Labor und Technik, 45 Heft 3 1994 S.126, der Degussa-Katalysator P 25-Anatal/Aerolyst eingesetzt. Aus praktischen Gründen kam Titandioxid-Pulver nicht in Frage. Somit wurde $TiO_2$ im Form von extrudierten und gepressten 2-mm-Vollzylindern eingesetzt.

Es ist bekannt, daß die katalytische Aktivität des Titandioxides von der Kristallstruktur, der Oberfläche und von der Vorbehandlung abhängt.

Es werden auch Kombinationen des Titandioxides mit Zeolithen eingesetzt.

Das Titandioxid sollte dabei als Halbleitermaterial'dienen, das durch Bestrahlung stark oxidierend wirkende OH-Radikale liefert, während der Zeolith die Aufgabe übernehmen könnte, die organischen Schadstoff zunächst zu adsorbieren, um damit die Verweildauer des Schadstoffes im Strahlungsbereich zu verlängern. Es wird ein hydrophober Zeolith vom Typ DAY eingesetzt. Von der Struktur her gleicht er dem Y-Zeolithen. Er hat regelmäßige Poren mit einem Durchmesser vom 0,8 nm, so daß er auch größere organische Moleküle aufnehmen kann. Für die Adsorption ist auch seine große spezifische Oberfläche von 800 $m^2/g$ und sein Mikroporenvolumen von 0,3 $cm^3/g$ günstig. Von diesem DAY-Zeolithen werden kleine Presszylinder, die 10 % Bindemittel enthalten, eingesetzt.

Die Zeolithe werden mit Eelmetallen geimpft. Dies geschieht dadurch, daß man das Katalystormaterial in den Salzlösungen der Metalle rührt, es anschließend im Trockenschrank bei 200 °C trocknet, um es schließlich im Simon-Müller-Ofen bei 750 °C zu calcinieren.

Als Edelmetalle können Palladium und/oder Platin eingesetzt werden.

Der chemische Sauerstoff Bedarf (CSB) gehört zu den wichtigsten Parametern für die Bewertung gewerblicher und kommunaler Abwässe, ( Otto Klee, Wasser untersuchungen, Quelle & Meyer Verlag, Berlin 1990).

Auf der Suche nach einem geeigneten analytischen Verfahren zur Bestimmung der organischen Schmutzfracht in Abwässern wird erkannt, daß die CSB-Messung aussagekräftige Ergebnisse als Summenparamenter für organische Verschmutzung liefern kann. Zur Messung des CSB-Wertes wird das Küvettentest- und das Fotometer-System von Dr. LANGE verwendet. Es werden Küvettentestsätze mit folgenden Messbereichen eingesetzt:

LCK 414:5-60 mg $O_2$/l LCK314:15-150 mg $O_2$/l
LCK 614:50-300 mg $O_2$/l

Dadurch kann auf dem Umweg über die Fotometrie die zur quantitativen Oxidation benötigte, volumenbezogene Masse an Sauerstoff ermittelt werden. Zur Abschätzung des CSB-Wertes beim Schadstoffeintrag in das Wasser unter Laborbedingungen wird die in der Literatur beschrieben Formel herangezogen (U. Baumann, Untersuchungen der biologischen Abbaubarkein organischer Stoffe mit einfachen Mitteln, Chemie in unserer Zeit 28 1994 5 S. 253ff), die die SCB-Berechnung bei organischen Stoffen bekannter Summenformel gestatte:

$$CSB= \frac{16\cdot(2c + 0{,}5\cdot(h - cl - 3n) + 3s + 2{,}5p + 0{,}5na\text{-}o\text{-})}{Mm}$$

Ihr liegt die allgemeine Formel $C_cH_hCl_{cl}N_nNa_{na}O_oP_pS_s$ zugrunde. "Mm" steht für Molekülmasse. Weitere Untersuchungen werden mit Kapilarzonen-Elektrophorese und der GC/MS-Methode durchgeführt. Die dabei verwendeten Massinstrumente stammen von Hewlett Packrd.

Um die Abbaureaktion in Gang zu setzen werden OH-Radikale benötigt, die aufgrund ihres hohen Oxidationspotentials von E°=2,80 V den oxidativen Abbau von organischen Wasserinhaltsstoffen durch Radikalkettenraktionen einleiten. Dabei können die reaktiven OH-Radikale mit organischen Molekülen wiederum organische Radikale erzeugen, die ihrerseits Reaktionen zur Oxidation des organischen Substrates einleiten. Durch Bestrahlung des Fotohalbleiters Titandioxid mit energiereichem UV-Licht werden, neben Superoxid-Radikal-Anionen ($O_2$), OH-Radikale gebildet (T. Oppenländer, Vakuum UV-Oxidation als Methode zur Abwasserreinigung, Chemie in unserer Zeit 30 1996 5, S. 244ff). Superoxid-Radikal-Anionen können zu Wasserstoffperoxid weiterreagieren, das auf verschiedenen Wegen OH-Radikale liefern kann

$$TiO_2 + h\cdot v \rightarrow TiO_2(e^- + h^+) \qquad (1)$$

$$TiO_2(h^+) + H_2O_{ad} \rightarrow TiO_2 + (OH)_{ad}^{\bullet} + H^+ \qquad (2)$$

$$TiO_2(e^-) + O_2 \rightarrow TiO_2 + (O)_2^{\bullet-} \qquad (3)$$

Zur Anregung der Bindungselektronen in den leitfähigen Zustand benötigt man UV-Licht. Dieses bewirkt an der Titandioxid-Oberfläche eine Ladungstrennung in positiv geladene Löcher ($h^+$) im Valenzband (valence band,VB) und negativ geladene Elektronen ($e^-$) im Leitungsband LB (conduction band, CB), da Elektronen aus dem Valenzband in das Leitungsband befördert werden (1).

Die Elektronenlöcher und die Elektronen können sich im Titandioxid-Partikel unabhängig von einander bewegen und sorgen so für Leitfähigkeit. Daneben liegen in Halbleitern auch "Haftstellen" für Löcher und Elektronen vor. Sie treten besonders häufig an der Oberfläche des Titandioxids auf. Aus diesen Haftstellen heraus können die Ladungsträger auf Reduktions- und Oxidationsmittel übertragen werden.

Der Mechanismus ist schematisch in der Figur 4 dargestellt.

Sowohl die Elektronen als auch die Löcher können mit gelösten Bestandteilen im Wasser Redoxreaktionen eingehen (2), (3). Der in Wasser gelöste Sauerstoff wirkt hierbei als Elektronenakzeptor. Die Elektronen, die in das Leitungsband gelangen, können aber auch andere Verbindungen in der Lösung reduzieren, während die positiven Löcher im Valenzband mit Wasser reagieren und die stark oxidierend wirkenden OH-Radikale bilden.

Schadstoff im Fotoreaktor Phenol

Die LCK 314-Reihe mit ca. 100 mg $O_2$/l CSB-Ausgangsbelastung (≙ 42 mg Pheno 1/1) macht deutlich, daß das phenolhaltige Wasser nach zweitstündiger Belichtungszeit praktisch Trinkwasserqualität erreicht (CSB-Wert des Hösbacher Leitungswasser: 3 mg $O_2$/l). Sie ermöglicht aber auch einen direkten Vergleich des dealuminierten Y-Zeolithen mit und ohne UV-Bestrahlung hinsichtlich der schadstoffabbauenden Aktivität. Der CSB-Wert des unbestrahlten DAY-Zeolithen reduziert sich von 100 auf ca. 60 mg $O_2$/l und bleibt dann weitgehend konstant. Dieser Befund spiegelt in erwarteter Weise die adsorptiven Eigenschaften des Reaktorbettes. Mit UV-Licht reduziert sich der Wert nochmals um fast 100 %. Diese erstaunliche Feststellung lässt eigentlich nur den Schluss zu, daß die Schadstoffe durch die UV-Strahlen in kleiner Moleküle zerlegt werden, die leichter in der porösen Struktur des Zeolithen aufgenommen werden

können. Im niedrigen Belastungsbereich ist die Abbauleistung des reinen Titandioxides auch durch $TiO_2$/DAY-Mischungen nicht zu übertreffen (siehe Figur 5).

Bei hoher Phenolkontamination (LCK) hat jedoch das Gemisch Vorteile gegenüber dem Einkomponenten-System (siehe Figur 6). Versuche zeigen, daß Gemische im Bereich von 4:1 bis 3:2 $TiO_2$/DAY die besten Abbauwerte liefern. Die Dotierung der Zeolith-Komponente mit dem Edelmetall Palladium zeigt interessante neue Perspektiven auf.

Untersuchungen des Phenolabbaus mit Hilfe der Gaschromatographie und der Kapillarzonen-Elektrophorese (CZE), die in 5 Minuten-Abständen nach Belichtungsbeginn vorgenommen werden, korrelieren mit den Befunden der CSB-Analyse. Die Phenolkonzentration sinkt in den ersten 5 Minuten um 49,4 %. Nach weiteren 5 min liegt die Minderung bei 67,97 %, dann bei 75,32 %, bis nach 20 Minuten 81,44 % des Phenols abgebaut sind. Diese sehr empfindlichen, analytischen Methoden nachen aber auch deutlich, daß offenbar Metabolite in keinem nennenswertem Umfang auftreten (siehe Figur 7).

Herbizide und Arzneimittel

Von alarmierenden Interesse im Bereich der Abwasser- und Trinkwasserreinhaltung ist die Belastung durch Pestizide, Herbizide und Insektizide, die in der Agrarwirtschaft zur Schädlingsbekämfung eingesetzt werden. Das Problem brannte auf den Nägeln, als man in den letzten Jahren Atrazin in solchen Mengen im Grundwasser nachweisen konnte, dass nur ein Ausbringungs-Verbot Abhilfe schffen konnte.

Wir wählen für unsere Untersuchungen ein Herbizid, das auch für Kleingärtner käuflich zu erwerben ist. Es trägt den Handelsmanem BANVEL® M und enthält mit den Wirkstoffen MCPA und Dicamba halogenhaltige Kontaminate (siehe die Formeln I und II).

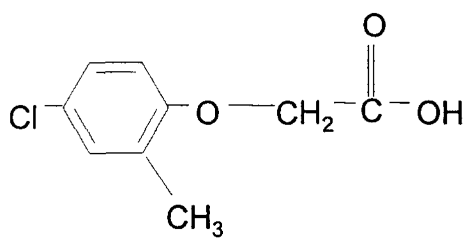

MCPA

(I)

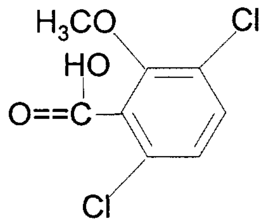

Dicamba

(II)

Die Ergebnisse des photokatalytischen Abbaus sind in der Figur 8 graphisch dargestellt.

Bei den Arzneimitteln werden frappierende Abbauleistungen erreicht: weit über 90 % der Wirkstoffe können bei einstündiger Belichtungszeit mineralisiert werden. Die Experimente unterstreichen die Vorzüge der zeolithhaltigen Schüttung (siehe Figuren 9 und 10).

**Festphasenextraktion in der Säule**

Die hervorragenden adsorbtiven Eigenschaften des DAY-Zeolithen und seine Schadstoffabbau-Leistungen bei Palladium-Imprägnierung lenkten mein ursprüngliches Forschungsvorhaben in eine völlig neue Richtung, die den apparativen Aufwand zur Wasserreinhaltung in ganz erheblichem Maße reduziert. Von dem Fotoreaktor mit energiereicher UV-Bestrahlung blieb nur noch eine Säule in Form einer Bürette mit Zeolith-Füllung übrig, die mit einer äußerst geringen Kontaktzeit von ca. 2 Minuten vom kontaminierten Wasser durchströmt wird. Mit der Modifikation der Apparatur änderte sich auch der Themenschwerpunkt dieser Arbeit von der Abwasserreinigung mit Schadstoffgehalten im ppm-Bereich hin zur Trinkwasser-Qualitätssicherung im ppb-Bereich. Als Reinigungsstufe wird eine 50 ml-Bürette (EB) mit Katalysatorfestbett, beziehungsweise eine Doppelbürette (DB), bestehend aus zwei hintereinander "geschalteten" Büretten, eingesetzt.

Das Feststoffvolumen beträgt dabei 30 g bei einfacher, beziehungsweise 60 g bei doppelter Länge. Zunächst wurden 100 ml, später auch 1000 ml, kontaminiertes Wasser euliert. Die Dotierung des DAY-Zeolithen erfolgte durch ca. zweistündiges Stehen in Palladium (II)-chlorid-Lösung, entsprechender Konzentration, mit anschließendem Trocknen und Calcinieren.

**Phenol**

Aus Tabelle 1 ist die bessere Reinigungsleistung der dotierten Zeolithe gegenüber dem edelmetallfreien Material ersichtlich (9-16 %). Es stellt sich die Frage, ob durch die Dotierung die ohnehin erstaunliche Adsorptionsleistung des unbeladenen DAY-Zeolithen noch verbessert wird, oder ob neben den Anlagerungseffekten auch noch andere Phänomene eine Rolle spielen.

Tabelle 1

| Dekontamination in Einzelbürette EB und Doppelbürette DB | | |
|---|---|---|
| | DAY undotiert | DAY/Pd 0,1 % |
| CSB 100/EB | 60 % | 71 % |
| CSB 60/EB | 58 % | 67 % |
| CSB 60/DB | 78 % | 94 % |

Die Ergebnisse zeigen, dass die Palladinierung von DAY-Zeolith mit 0,1 %iger $PdCl_2$-Lösung bei Phenolkontaminiertem Wasser eine Reinigungsleistung von 71 % im CSB-100-Messbereich erbringt, während die reine DAY-Schüttung das Phenol zu 60 % beseitigt. Analoge Befunde ergeben sich im CSB-60-Test für Phenol.

Aus Figur 11 geht hervor, dass die Erhöhung der Beladung des Zeolithen mit Palladium nicht zwangsläufig zu einer Steigerung der Schadstoffeliminierung führt. Die besten Ergebnisse liefert die Imprägnierung mit 0,1-0,2 %iger Edelmetall-Lösung. Diese Erkenntnis deckt sich mit den Befunden der Patentschrift (B. Unger, R. Thome, G. Öhlmann, H-G. Jerschklewitz, Europäische Patentanmeldung vom 21.12.92, EP 054509 A1) "Bei einer höheren Pd-Beladung als 0,15 % werden die Diffusionsvorgänge von Edukten und Reaktionsprodukten im Porensystem durch Ausbildung von Pd-Clustern, was zu einer teilweisen oder vollständigen Blockierung des Porensystems führt, gehindert. Nur bei einer hohen Dispersität der Aktivkomponente ist die Zugänglichkeit und damit die Katalysatoraktivität gewährleistet".

Ausgehend von dieser Versuchsreihe wird vermutet, dass die Palladium-Dotierung zur Entfaltung abbaukatalytischer Aktivitäten führt. Offenbar kommt es neben der reinen adsorptiven Schadstoffbeseitigung zusätzlich zu einer oxidativen Zerstörung des organischen Kontaminats.

Weitere Versuche zeigen, das es neben einer adsorbtiven Schadstoffbeseitigung zusätzlich zu einem oxidativen Abbau der organischen Komponenten kommt. So ergibt Methanol mit Palladium beladenem DAY-Zeolithen bei Raumtemperatur eine positive Schiffsche-Probe. Auch das Durchleiten von Methanol- und Ameisensäure-Dämpfen durch ein mit dotiertem DAY beschichtetes U-Rohr liefert eine feine Trübung im Barytwasser. In den Lehrbüchern für Organische Chemie finden sich Hinweise, dass die Dehydrierung von Alkoholen zu Aldehyden sowie die Oxidation von Aldehyden zu Carbonsäuren durch Edelmetalle, wie zum Beispiel Silber, katalysiert wird. Auch die Decarboxylierung von Ameisensäure am Palladium-Kontakt ist bekannt. Es ist jedoch überraschend, dass bei so kurzen Kontaktzeiten und noch dazu bei Raumtemperatur offenbar sauerstoffhaltige organische Stoffe zerstört werden können (siehe Figur 12).

Auch die Ergebnisse der Temperaturreihe weisen in diese Richtung.
Der undotierte DAY hat bei ca. 20 °C ein Optimum und vermindert seine Reinigungsleistung bei 70 °C um mehr als 20 %. Bei Palladinierung sinkt die Abbauleistung mit der Temperaturerhöhung von 94,4 % (20 °C) über 88 % (50 °C)

auf ca. 76 % (70 °C). Ein eindeutiger Trend ergibt sich beim Abbau des Chlorherbizids. Es kann spekuliert werden, dass auch der undotierte DAY-Zeolith in geringem Maße katalytisch aktiv wird.

In einer weiteren Versuchsreihe wird die Phenol-Belastung des Festbettes sukzessive erhöht, indem fünfmal je 100 ml Wasser mit einem Phenolgehalt von je 0,025 g/l auf die Säule gegeben wird. Die Reinigungsleistung vermindert sich dabei schrittweise von 94 % im ersten Durchlauf auf 62,5 % im fünften. Bei Zugabe eines Liters in einem Guss beträgt sie noch 55 %. Wird diese Menge phenolhaltigen Wassers aufgefangen und immer wieder durch die Säule geschickt, so stellt sich im Mittel eine Abbaurate von 43 % ein. Dieser Befund macht deutlich, dass zwar eine starke Reinigungsleistung im ersten Schritt erzielt wird, dass es aber bei den nachfolgenden Reinigungsschritten mit demselben Eluat wieder zu Desorptionen kommt, die die CSB-Werte leicht ansteigen lassen.

Die bisher beschriebenen Untersuchungen beziehen sich auf 100 ml Eluat, das einmalig die Säule passiert. Nun galt es einen Dauerbetrieb zu installieren und die Adsorptionskapazität zu bestimmen. Dabei ist zu beachten, dass bei einem CSB-Wert 100 entsprechend 4,2 mg Phenol/100 ml Wasser ca. 3 mg von der Schüttung adsorbiert werden. Auch wenn dies im diskontinuierlichen Betrieb geschieht, so handelt es sich doch für die Trinkwasseraufbereitung um unrealistisch hohe Schadstoffkonzentrationen. Man erhält eine Vorstellung davon, was eine solche Säule bei geringer Belastung, wie sie in Rohrwassersystemen vorkommt, im kontinuierlichen Betrieb leisten kann.

Auf dem Weg zum Dauerbetrieb wurde dieselbe Säule fünfmal mit 100 ml phenolhaltigem Wasser (25 mg/l) belastet. Die Reinigungsleistung zwischen 600 ml und 900 ml wurde durch Extrapolation bestimmt. Bei 10 Reinigungsschritten mit jeweils konstanter Ausgangsbelastung verbleiben immerhin 16,5 mg Schadstoff auf 60 g Säulenfüllung. Daß die Dekontamination mit zunehmender Belastung rückläufig ist, war zu erwarten (siehe Figur 13).

### Herbizide und Arzneimittel

Chlorpestizide und Arzneimittelrückstände mögen in ihrem Gefährdungspotential für den Wassertrinker wohl noch höher einzuschätzen sein, als die organische Fracht des Wassers, die natürlichen Ursprungs ist.

Die Ergebnisse sind sowohl auf der Grundlage der CSB-Analytik, als auch in Bezug auf GC/MS- und CZE-Untersuchungen beeindruckend, vor allem wenn man den Standard der Trinkwasseraufbereitung, nämlich Aktivkohle damit vergleicht. Die Abbauleistungen des palladinierten DAY-Zeolithen übertrifft die der Aktivkohle bei allen Versuchsreihen. Beim Herbizidabbau ist eine Verbesserung der Reinigungsleistung mit zunehmender Säulentemperatur zu verzeichnen. Dies gilt sowohl für die imprägnierte als auch für die nichtdotierte Zeolith-Schüttung. Solche Befunde stützen wiederum die Annahme von katalytisch aktiven Zentren in beiden Fällen (siehe Figur 14).

### Patentansprüche

1. Verfahren zur Entfernung von organischen Stoffen aus Wasser und/oder wässrigen Systemen, **dadurch gekennzeichnet, dass** man das Wasser oder das wässrige System über eine Kombination aus einem photoaktiven Katalysator und/oder einem Adsorbens leitet und gegebenenfalls dabei gleichzeitig mit UV-Licht bestahlt.

2. Verfahren nach Anspruch 1, **dadurch gekennzeichnet, dass** man als photoaktiven Katalysator Titandioxid verwendet.

3. Verfahren nach Anspruch 2, **dadurch gekennzeichnet, dass** Titandioxid in Form der Anatasstruktur verwendet wird.

4. Verfahren nach Anspruch 2, **dadurch gekennzeichnet, dass** als Titandioxid pyrogenes Titandioxid verwendet wird.

5. Verfahren nach Anspruch 1, **dadurch gekennzeichnet, dass** man als Adsorbens hydrophobe Zeolithe einsetzt.

6. Verfahren nach Anspruch 5, **dadurch gekennzeichnet, dass** man als Adsorbens hydrophobe Zeolithe mit einem Hydrophobiefaktor von größer 1 einsetzt.

7. Verfahren nach Anspruch 5, **dadurch gekennzeichnet dass** man als Adsorbens siliziumreiche Zeolithe einsetzt.

8. Verfahren nach Anspruch7, **dadurch gekennzeichnet, dass** man als siliziumreiche Zeolithe dealuminierte Y-Zeolithe und/oder ZSM-5-Zeolithe und/oder Mordenite einsetzt.

9. Verfahren nach Anspruch 1, **dadurch gekennzeichnet, dass** man als Adsorbens metalldotierte Zeolithe einsetzt.

**10.** Verfahren nach Anspruch 1, **dadurch gekennzeichnet, dass** man ein UV-Licht der Wellenlänge kleiner/gleich 400 nm verwendet.

**11.** Verfahren nach Anspruch 1, **dadurch gekennzeichnet, dass** die organischen Verbindungen Pflanzenschutzmittel und/oder Arzneimittelwirkstoffe sind und/oder eine östrogenartige Wirkung aufweisen.

**12.** Verfahren nach Anspruch 1, **dadurch gekennzeichnet, dass** das Adsorbens als Festbett eingesetzt wird.

**13.** Verfahren nach Anspruch 9, **dadurch gekennzeichnet, dass** die Metalldotierung aus einem oder mehreren Edelmetallen besteht.

**14.** Verfahren nach Anspruch 13, **dadurch gekennzeichnet dass** man als Edelmetall ionogenes oder elementares Palladium verwendet.

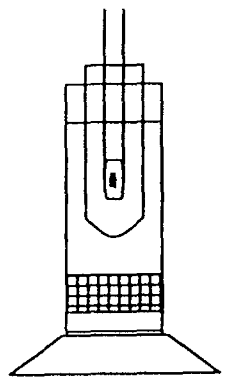

**Standzylinder mit UV-Lampe im Tauchrohr**

| | |
|---|---|
| Methode: | UV-Oxidation |
| Festbett: | Titandioxid |
| Volumen: | 250ml |

Figur 1

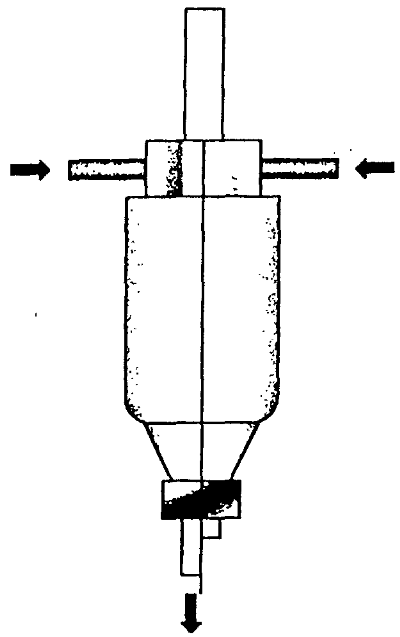

**Fotoreaktor mit UV-Lampe im Tauchrohr**

| | |
|---|---|
| Methode: | UV-Oxidation/Adsorption |
| Festbett: | Titandioxid, DAY, DAY/Pd |
| Volumen: | 2400ml |

Figur 2

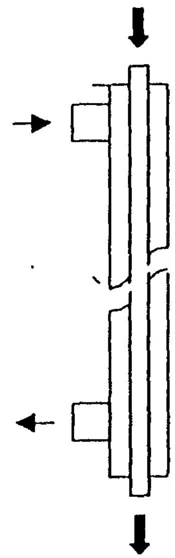

**Doppelbürette für Festphasenextraktion**

Methode: Adsorption
Festbett: DAY,DAY/Pd
Volumen: 100ml

→ Heizwasser/Kühlwasser

➡ kontaminiertes Wasser

➡ gereinigtes Wasser

Figur 3

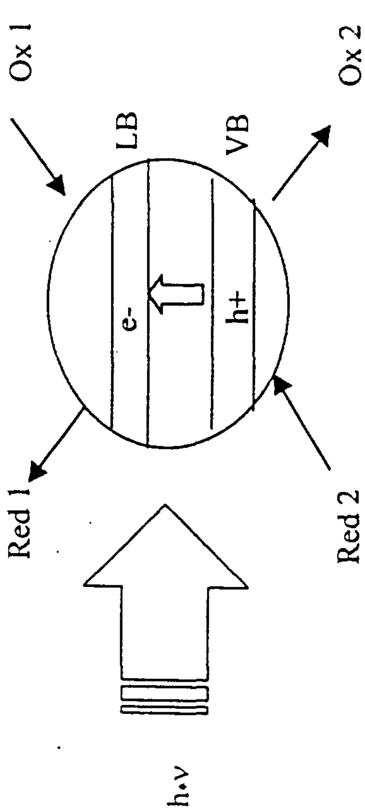


Redoxreaktionen an der Oberfläche der Titandioxid- Partikel

Figur 4

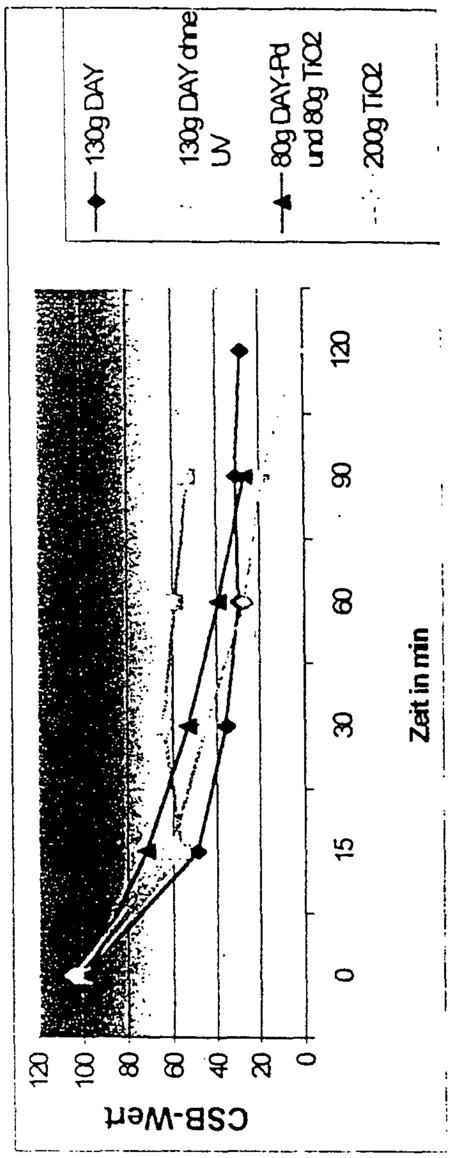


Phenolabbau mit $TiO_2$ und DAY-Zeolith

Figur 5

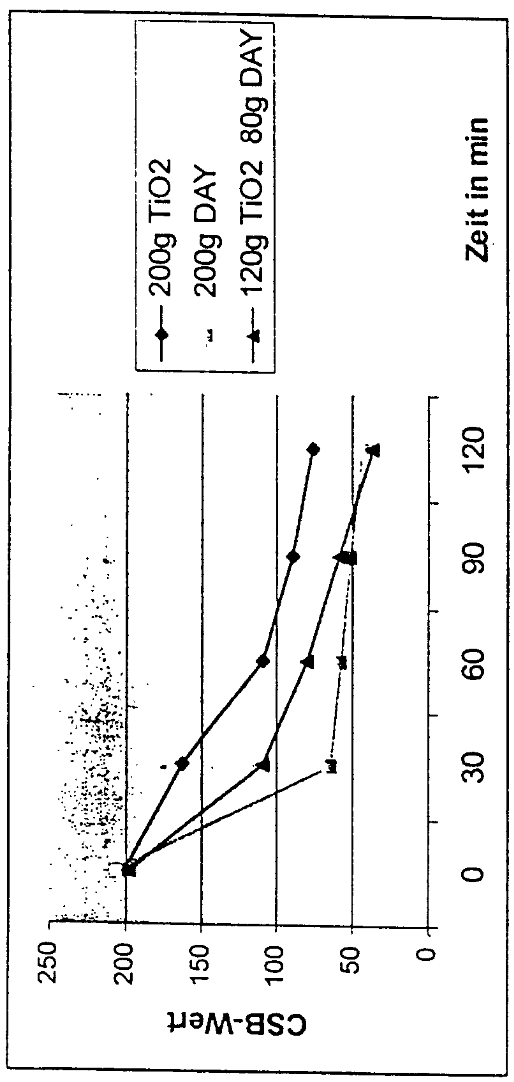


**Phenolabbau im LCK 614 Bereich (84mg Phenol/1000ml Wasser)**

Figur 6

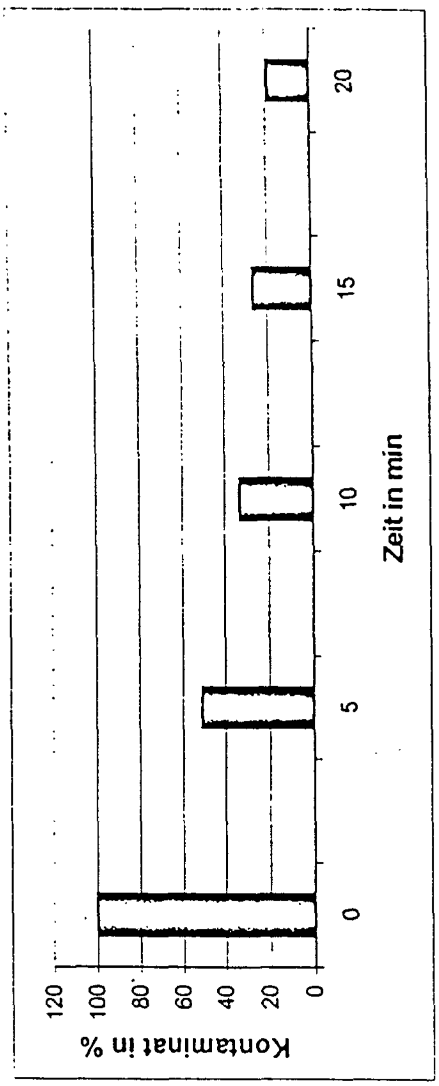


Elektropherogramm des Phenolabbaus

Figur 7

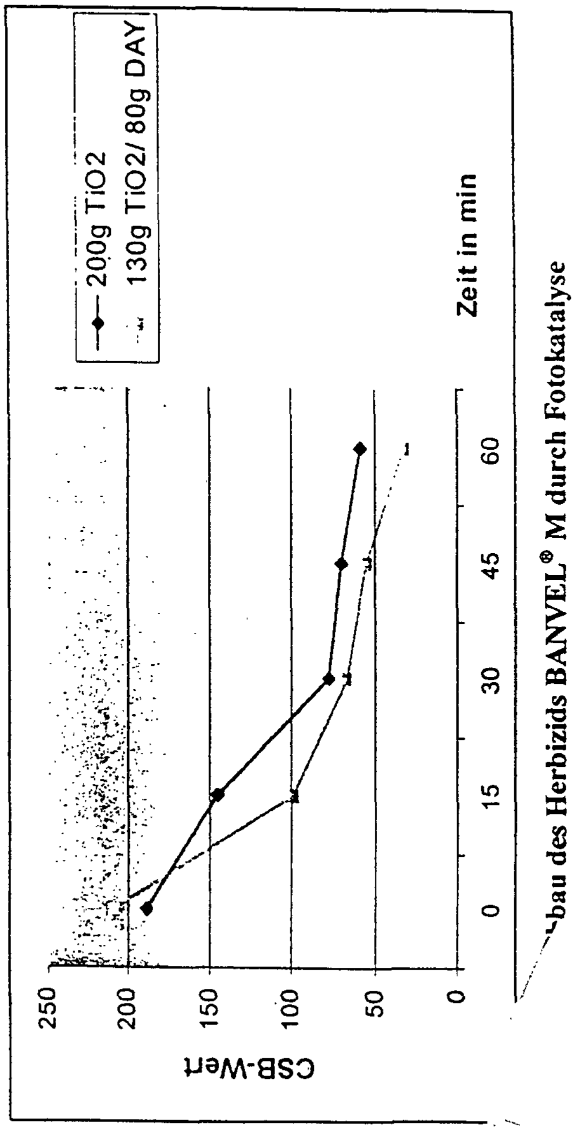


...bau des Herbizids BANVEL® M durch Fotokatalyse

Figur 8

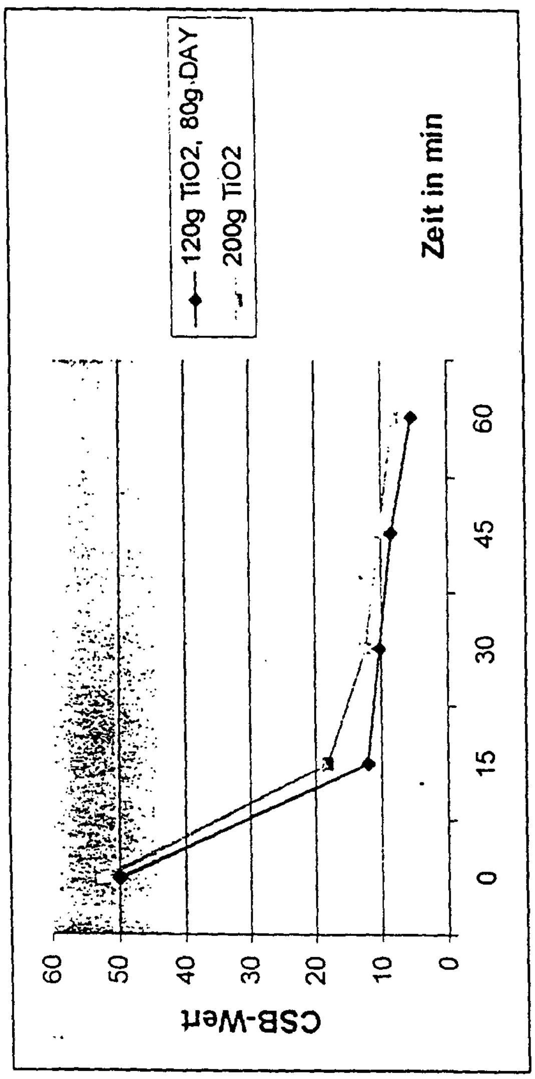


Ibuprofenabbau im Reaktor

Figur 9

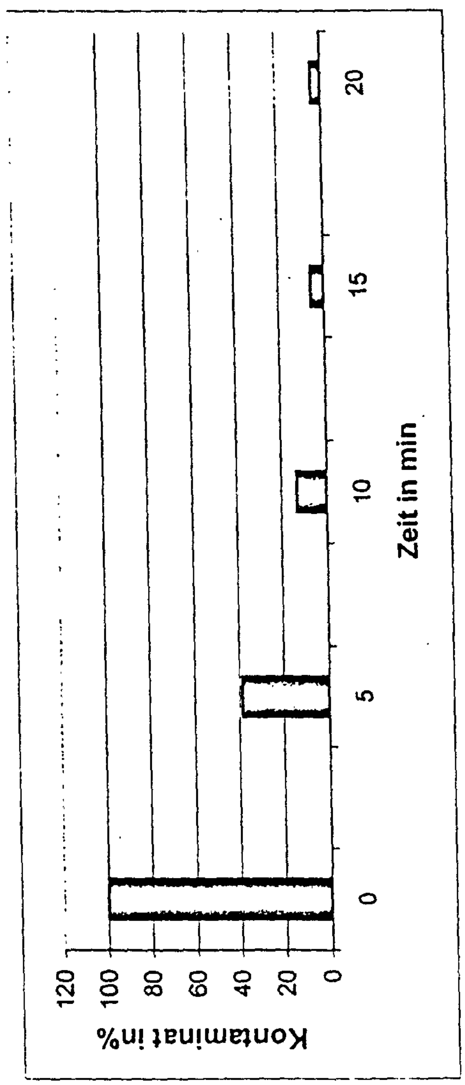


Elektropherogramm des Ibuprofenabbaus (Zusammenschnitt; Original s. Anhang)

Figur 12

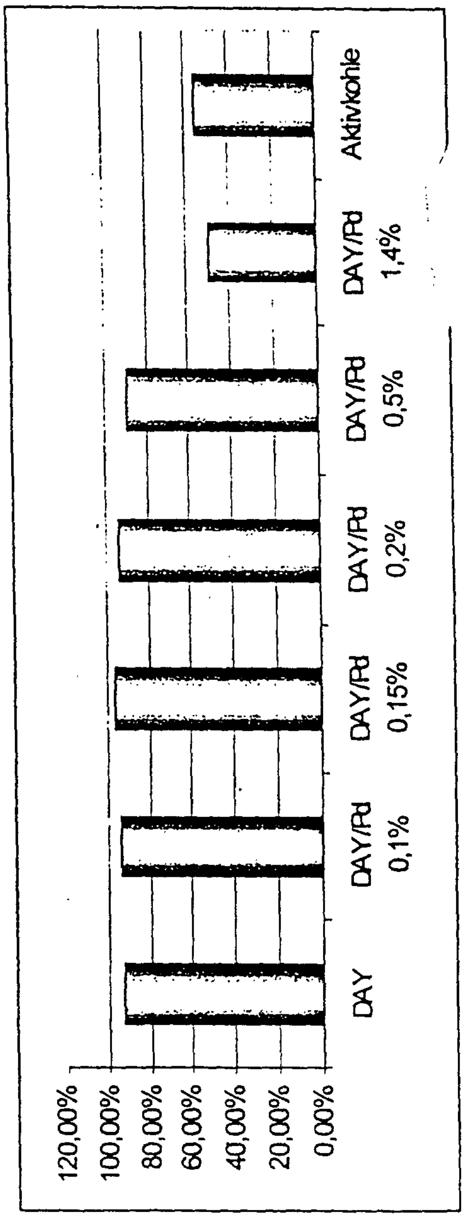


**Variation der Palladium-Beladung**

Figur 11

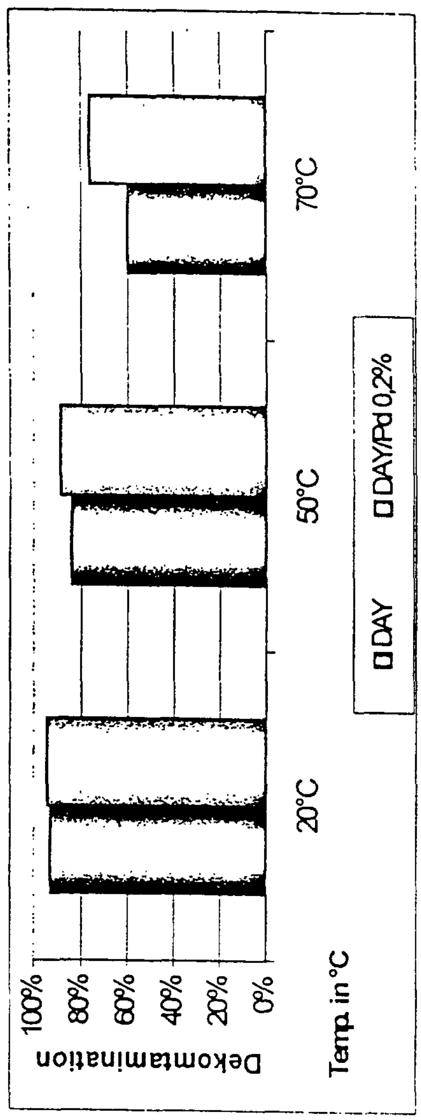
Dekomtamination
100%
80%
60%
40%
20%
0%
20°C
50°C
70°C
Temp. in °C
DAY
DAY/Pd 0,2%

Figur 12

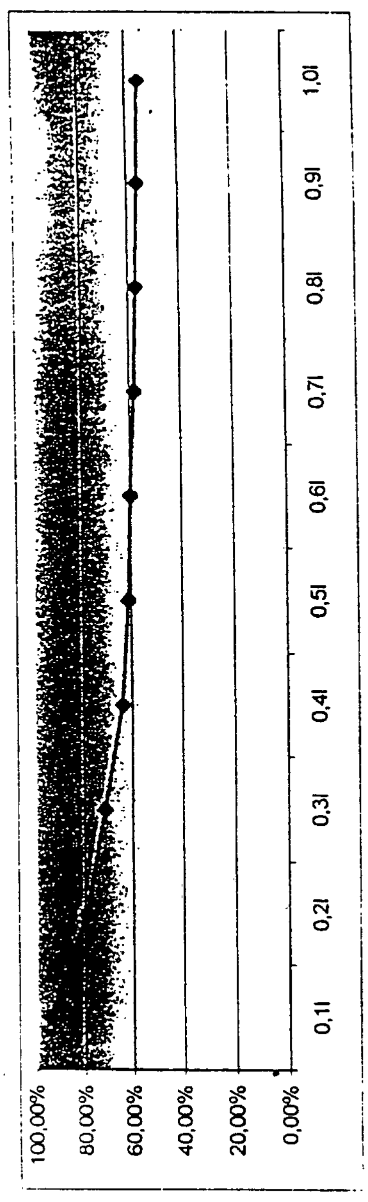


Phenolabbau im kontinuierlichen Reinigungsbetrieb

Figur 13

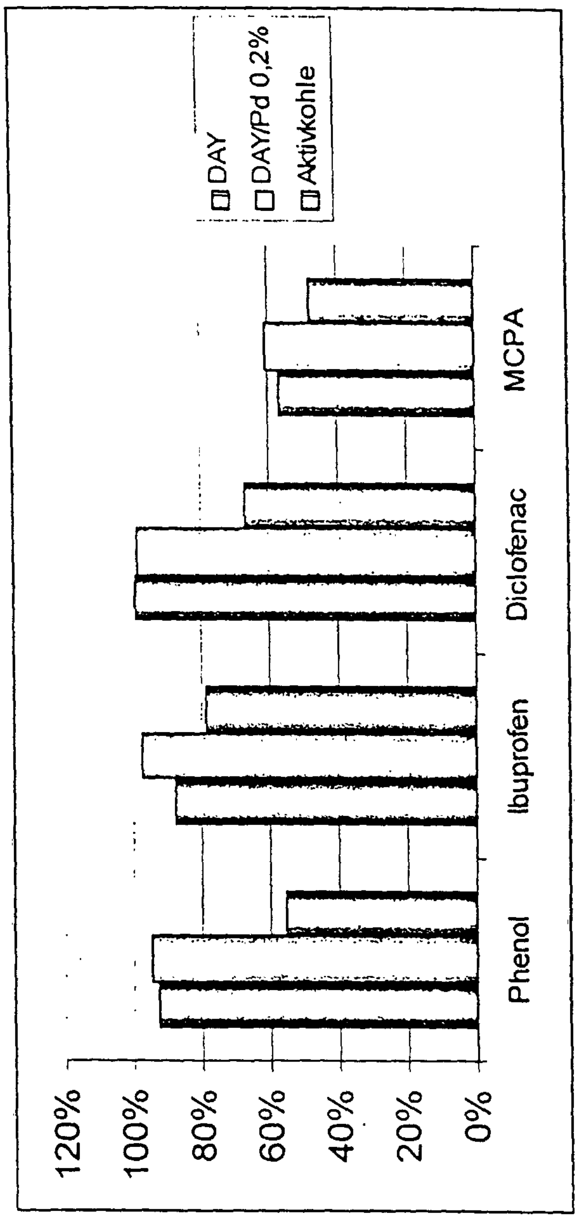


Reinigungsleistung verschiedener Adsorbentien

Figur 14

Europäisches Patentamt

# EUROPÄISCHER RECHERCHENBERICHT

Nummer der Anmeldung
EP 00 10 5532

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 299 17 615 U (NOLL JOCHEN ;FISCHER IVONNE (DE)) 20. Januar 2000 (2000-01-20)<br>* das ganze Dokument *<br>--- | 1-14 | C02F1/32<br>C02F1/72<br>C02F1/28 |
| X | US 5 981 426 A (LANGFORD COOPER H ET AL) 9. November 1999 (1999-11-09)<br>* Spalte 1, Zeile 23,24; Anspruch 11 *<br>* Spalte 4, Zeile 13-25 *<br>--- | 1,2,5-10 | |
| X | EP 0 804 877 A (TOTO LTD) 5. November 1997 (1997-11-05)<br>* Seite 2, Zeile 21-31 *<br>* Seite 3, Zeile 48 *<br>* Seite 11, Zeile 36-59 *<br>* Ansprüche *<br>--- | 1-3,9, 13,14 | |
| X | US 5 182 030 A (CRITTENDEN JOHN C ET AL) 26. Januar 1993 (1993-01-26)<br>* Zusammenfassung *<br>* Spalte 2, Zeile 48-53 *<br>* Spalte 2, Zeile 63 - Spalte 3, Zeile 10 *<br>* Spalte 3, Zeile 47-49 *<br>--- | 1-3,10, 12 | RECHERCHIERTE SACHGEBIETE (Int.Cl.7)<br>C02F |
| A | US 5 234 883 A (SCHAEFER-SINDLINGER ADOLF ET AL) 10. August 1993 (1993-08-10)<br>* Zusammenfassung *<br>--- | 2-4 | |
| A | DATABASE WPI<br>Section Ch, Week 198423<br>Derwent Publications Ltd., London, GB;<br>Class E32, AN 1984-145645<br>XP002144132<br>& SU 1 043 154 A (CHERNOVTSY UNIV), 23. September 1983 (1983-09-23)<br>* Zusammenfassung *<br>----- | 2-4 | |

Der vorliegende Recherchenbericht wurde für alle Patentansprüche erstellt

| Recherchenort | Abschlußdatum der Recherche | Prüfer |
|---|---|---|
| DEN HAAG | 3. August 2000 | Serra, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 00 10 5532

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2000

| Im Recherchenbericht angeführtes Patentdokument | Datum der Veröffentlichung | Mitglied(er) der Patentfamilie | Datum der Veröffentlichung |
|---|---|---|---|
| DE 29917615 U | 20-01-2000 | KEINE | |
| US 5981426 A | 09-11-1999 | DE 69603580 D | 09-09-1999 |
| | | DE 69603580 T | 04-05-2000 |
| | | EP 0812301 A | 17-12-1997 |
| | | JP 11500660 T | 19-01-1999 |
| | | AT 182859 T | 15-08-1999 |
| | | CA 2212869 A | 06-09-1996 |
| | | WO 9626903 A | 06-09-1996 |
| EP 0804877 A | 05-11-1997 | US 5961843 A | 05-10-1999 |
| | | CN 1159741 A | 17-09-1997 |
| | | WO 9610917 A | 18-04-1996 |
| US 5182030 A | 26-01-1993 | KEINE | |
| US 5234883 A | 10-08-1993 | DE 4109502 A | 24-09-1992 |
| | | BR 9200956 A | 17-11-1992 |
| | | DE 59203002 D | 31-08-1995 |
| | | EP 0505863 A | 30-09-1992 |
| | | JP 5096167 A | 20-04-1993 |
| SU 1043154 A | 23-09-1983 | KEINE | |

EPO FORM P0461

Für nähere Einzelheiten zu diesem Anhang : siehe Amtsblatt des Europäischen Patentamts, Nr.12/82